(19) Europäisches Patentamt
European Patent Office
Office européen des brevets

(11) **EP 4 654 150 A1**

(12) **EUROPEAN PATENT APPLICATION**

(43) Date of publication:
26.11.2025 Bulletin 2025/48

(21) Application number: 25176651.5

(22) Date of filing: 15.05.2025

(51) International Patent Classification (IPC):
*G06T 19/20* (2011.01)    *G06N 3/00* (2023.01)

(52) Cooperative Patent Classification (CPC):
G06T 19/20; G06N 3/00; G06N 3/045; G06N 3/047;
G06N 3/088; G06N 7/01; G06N 20/00;
G06T 2219/2024

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 24.05.2024 US 202418673841

(71) Applicant: The Boeing Company
Arlington, VA 22202 (US)

(72) Inventors:
• AFRASIABI, AMIR
Arlington, 22202 (US)
• RAFATI, SINA
Arlington, 22202 (US)

(74) Representative: Bugnion S.p.A. - US1
Bugnion S.p.A.
Via Pancaldo 68
37138 Verona (IT)

(54) **IMAGE TO IMAGE TRANSLATION WITH SEMI-GENERATIVE ARTIFICIAL INTELLIGENCE**

(57) Semi-generative artificial intelligence modelling between domains is provided. The method comprises receiving a source image of an object in a first domain and diffusing the source image through a source diffusion model to generate a first Gaussian distribution in the first domain. Embeddings are generated from metadata which provides constraints for image reconstruction. The embeddings are fed into dual diffusion implicit bridges. The first Gaussian distribution is sampled and mapped, through the dual diffusion implicit bridges, from the first Gaussian distribution to a second Gaussian distribution in a second domain. The second Gaussian distribution is then reversed diffused through a target diffusion model to generate a target image of the object in the second domain in accordance with the metadata.

FIG. 1

EP 4 654 150 A1

## Description

### BACKGROUND INFORMATION

**Technical Field:**

The present disclosure relates generally to artificial intelligence systems, and more specifically to controlling randomized noise in generative AI models.

**Background:**

Object detection systems implementing artificial intelligence are trained to accurately detect target objects using large realistic visual data sets, which have high accuracy, specificity, and diversity. High accuracy is achieved by reducing biases from human labelers. High specificity is achieved by capturing different images of the target object in various environmental conditions. High diversity is achieved by including various images of the target object from various view angles and perspectives. However, developing large realistic visual data sets with high accuracy, specificity, and diversity is a challenge, especially using conventional methods of manually taking pictures of the target objects using cameras, and having a human operator label each image with a ground truth target object class. These limitations have slowed the development and deployment of large scale object detection systems.

### SUMMARY

An illustrative embodiment provides a method for semi-generative artificial intelligence modelling between domains. The method comprises receiving a source image of an object in a first domain and diffusing the source image through a source diffusion model to generate a first Gaussian distribution in the first domain. Embeddings are generated from metadata which provides constraints for image reconstruction. The embeddings are fed into dual diffusion implicit bridges. The first Gaussian distribution is sampled and mapped, through the dual diffusion implicit bridges, from the first Gaussian distribution to a second Gaussian distribution in a second domain. The second Gaussian distribution is then reversed diffused through a target diffusion model to generate a target image of the object in the second domain in accordance with the metadata.

Another illustrative embodiment provides a system for semi-generative artificial intelligence modelling between domains. The system comprises a storage device that stores program instructions and one or more processors operably connected to the storage device and configured to execute the program instructions to cause the system to: receive a source image of an object in a first domain; diffuse the source image through a source diffusion model to generate a first Gaussian distribution in the first domain; generate embeddings from metadata, wherein the metadata provides constraints for image reconstruction; feed the embeddings into dual diffusion implicit bridges; sample from the first Gaussian distribution; map, through the dual diffusion implicit bridges, the sample from the first Gaussian distribution to a second Gaussian distribution in a second domain; and reverse diffuse the second Gaussian distribution through a target diffusion model to generate a target image of the object in the second domain in accordance with the metadata.

Another illustrative embodiment provides a computer program product for semi-generative artificial intelligence modelling between domains. The computer program product comprise a computer-readable storage medium having program instructions embodied thereon to perform the steps of: receiving a source image of an object in a first domain; diffusing the source image through a source diffusion model to generate a first Gaussian distribution in the first domain; generating embeddings from metadata, wherein the metadata provides constraints for image reconstruction; feeding the embeddings into dual diffusion implicit bridges; sampling from the first Gaussian distribution; mapping, through the dual diffusion implicit bridges, the sample from the first Gaussian distribution to a second Gaussian distribution in a second domain; and reverse diffusing the second Gaussian distribution through a target diffusion model to generate a target image of the object in the second domain in accordance with the metadata.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:

**Figure 1** depicts a block diagram of a semi-generative system in accordance with an illustrative embodiment;

**Figure 2** depicts a diagram illustrating a diffusion model with which the illustrative embodiment can be implemented;

**Figure 3** depicts a diagram illustrating an example of image translation between domains in accordance with an illustrative embodiment;

**Figure 4** depicts a diagram illustrating semi-generative AI image generation using metadata constraints in accordance with an illustrative embodiment;

**Figure 5** depicts an example of imaging decoding from a 3D CAD model to a photorealistic model in accordance with an illustrative embodiment;

**Figure 6** depicts a flowchart illustrating a process for semi-generative artificial intelligence modelling between domains in accordance with an illustrative embodiment; and

**Figure 7** is an illustration of a block diagram of a data processing system in accordance with an illustrative embodiment.

## DETAILED DESCRIPTION

The illustrative embodiments recognize and take into account that generative artificial intelligence (AI) models lack accuracy and validation layers to verify integrity of generated content.

The illustrative embodiments provide a method of semi-generative AI modeling in which adds an additional layer of accuracy and fidelity to generated contents from generative AI models. By utilizing meta data from Design, Production, and Inspection data in manufacturing and production environment the illustrative embodiments control output of the generative AI models through Dual-Fusion techniques.

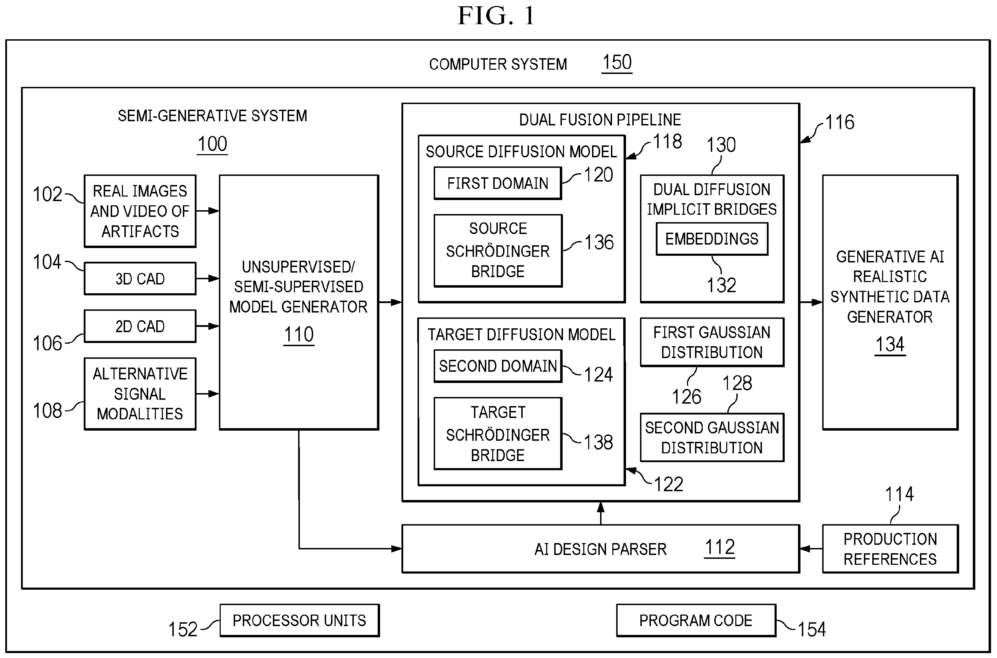

**Figure 1** is a block diagram of a semi-generative system depicted in accordance with an illustrative embodiment. Semi-generative system **100** utilizes data from a variety of sources including real images and video **102** of artifacts, three-dimensional (3D) computer assisted design (CAD) data **104**, two-dimensional (2D) CAD drawings **106**, and alternative signal modalities **108**.

Real images and video **102** of artifacts act as ground truth data for real domain dataset generation. 3D CAD data **104** provides another domain for image data. 3D CAD data **104** can be derived from engineering Product Data Management (PDM) and is used for synthetic domain dataset generation.

2D CAD drawings **106** provide production and design engineering metadata (i.e., anything data that is not a 3D object). Alternative signal modalities **108** provide additional metadata such as textual data, audio data, or graph representation describing real images and video **102**. The metadata provides constraints to ensure that AI generated images conform to desired characteristics. When converting image data from one domain to another, the constraints exert control over the output domain (e.g., a specific type of object viewed from a specific angle). Such constraints help ensure that the output image is as close as possible to an original input image in all respects.

The data and metadata from real images and video **102** of artifacts, three-dimensional (3D) computer assisted design (CAD) data **104**, two-dimensional (2D) CAD drawings **106**, and alternative signal modalities **108** are fed into unsupervised/semi-supervised model generator **110**, which comprises an end-to-end object detection system that identifies objects using structured data and unstructured data. Images are cropped and converted to latent space and then clustered according to visual similarity. Clusters are then matched to features of a provided example and labeled.

The different modalities of data are then fed by unsupervised/semi-supervised model generator **110** into dual fusion pipeline **116**.

AI design parser **112** reads and interprets information from production references **114** (e.g., engineering drawings) regarding limitations of the target object to be generated to match with real images and video **102** to provide additional constraints. AI design parser **112** is able to provide information that might be missing from the alternative signal modalities **108**. AI design parser **112** can cross-reference text, geometry, engineering specifications, and mathematics against real images and video **102**.

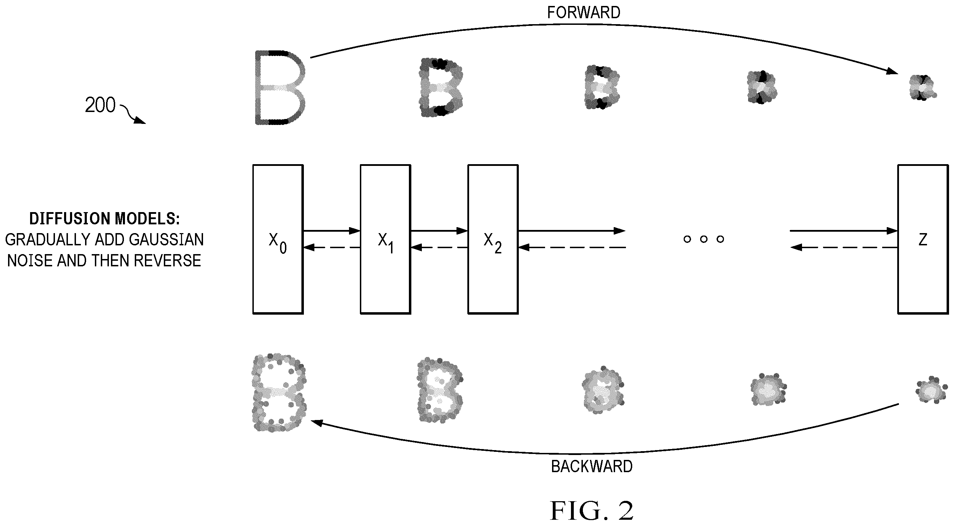

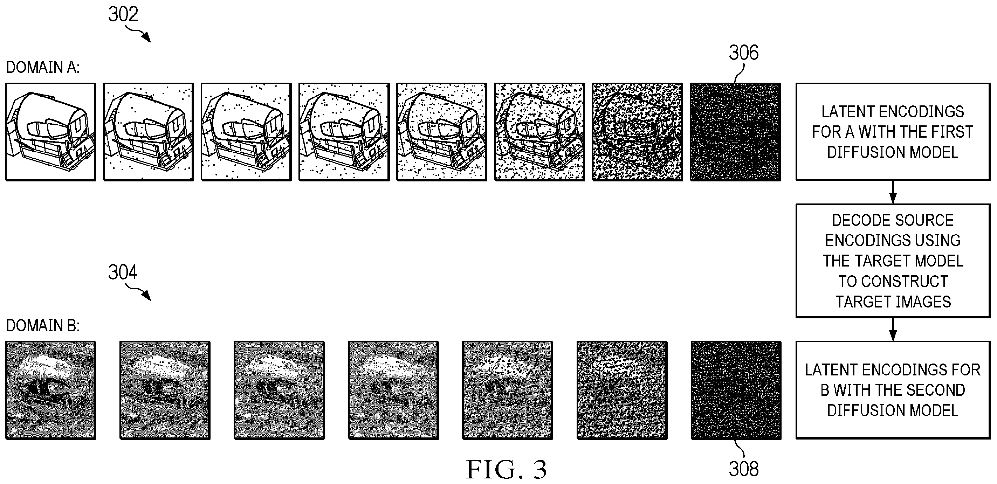

Dual fusion pipeline **116** comprises a source diffusion model **118** that is trained on a first domain **120** of data (e.g., 3D CAD). Source diffusion model **118** uses a source Schrödinger bridge **136** to generate a first Gaussian distribution **126** in the first domain **120** from image data. (See **Figures 2** and **3**). A diffusion Schrödinger bridge seeks to find a stochastic process that connects two probability distributions in the most probable way within given constraints.

Dual fusion pipeline **116** also comprises a target diffusion model **122** that is trained on a second domain **124** of data (e.g., real world). Target diffusion model **122** uses target Schrödinger bridge **138** for reverse diffusion to generate image data in the second domain **124** from a second Gaussian distribution **128**.

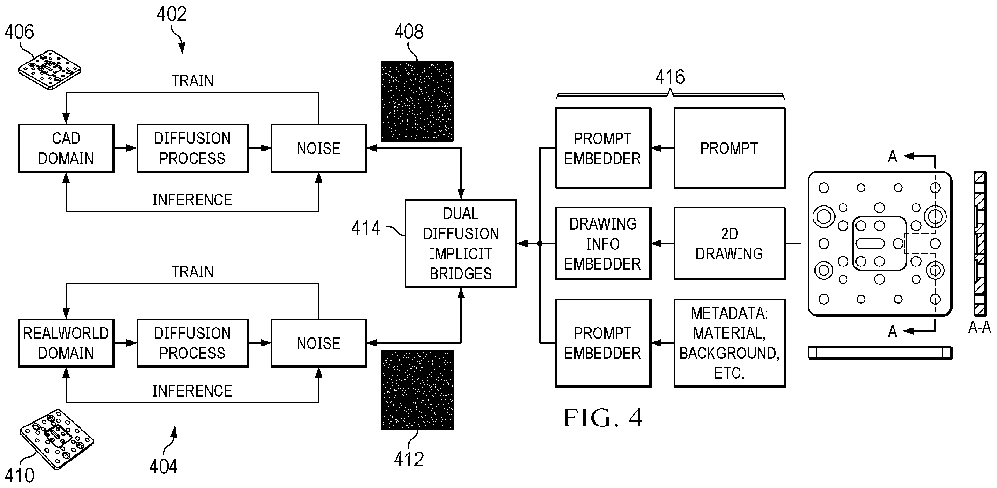

Dual diffusion implicit bridges **130** provide translation between first Gaussian distribution **126** and second Gaussian distribution **128** by mapping from the first domain **120** to the second domain **124**. (See **Figure 4**). Dual diffusion implicit bridges **130** are a back-to-back concatenation of source to latent space and from latent space to target Schrödinger bridge **138**. Dual diffusion implicit bridges **130** can incorporate embeddings **132** generated from metadata provided by 2D CAD **106**, alternative signal modalities **108**, and AI design parser **112**. The metadata represented by embeddings **132** provide constraints when translation between Gaussian distributions of different domains.

The dual fusion pipeline **116** has the advantage of images with superior FID (Fréchet Inception Distance) scores than other models. FID is a measure of the quality of images created by generative models. FID compares the distribution of generated images with the distribution of a set of real images (which function as ground truth). A lower FID score indicates greater similarity between generated and real images. Diffusion models can generate lower FID scores than other types of models such as Generative Adversarial Networks (GANs).

The output from the dual fusion pipeline **116** is fed into generative AI realistic synthetic data generator **136,** which generates synthetic data for use by object detection models.

Semi-generative system **100** can be implemented in software, hardware, firmware, or a combination thereof. When software is used, the operations performed by semi-generative system **100** can be implemented in program code configured to run on hardware, such as a processor unit. When firmware is used, the operations performed by semi-generative system **100** can be implemented in program code and data and stored in persistent memory to run on a processor unit. When hardware is employed, the hardware can include circuits that operate to perform the operations in semi-generative system **100.**

In the illustrative examples, the hardware can take a form selected from at least one of a circuit system, an integrated circuit, an application specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field programmable logic array, a field programmable gate array, and other suitable hardware devices. Additionally, the processes can be implemented in organic components integrated with inorganic components and can be comprised entirely of organic components excluding a human being. For example, the processes can be implemented as circuits in organic semiconductors.

Computer system **150** is a physical hardware system and includes one or more data processing systems. When more than one data processing system is present in computer system **150,** those data processing systems are in communication with each other using a communications medium. The communications medium can be a network. The data processing systems can be selected from at least one of a computer, a server computer, a mobile device such as a tablet computer, or some other suitable data processing system.

As depicted, computer system **150** includes a number of processor units **152** that are capable of executing program code **154** implementing processes in the illustrative examples. As used herein, a processor unit in the number of processor units **152** is a hardware device and is comprised of hardware circuits such as those on an integrated circuit that respond and process instructions and program code that operate a computer. When a number of processor units **152** execute program code **154** for a process, the number of processor units **152** is one or more processor units that can be on the same computer or on different computers. In other words, the process can be distributed between processor units on the same or different computers in a computer system. Further, the number of processor units **152** can be of the same type or different types of processor units. For example, a number of processor units can be selected from at least one of a single core processor, a dual-core processor, a multi-processor core, a general-purpose central processing unit (CPU), a graphics processing unit (GPU), a digital signal processor (DSP), or some other type of processor unit.

**Figure 2** depicts a diagram illustrating a diffusion model with which the illustrative embodiment can be implemented. Diffusion model **200** is an example of first and second diffusion models **118, 122** in **Figure 1.**

Diffusion model **200** is trained by progressively adding noise to an image in stages (i.e., X1, X2, etc.) and then reconstructing that image (reverse diffusion) from each stage. As the diffusion model **200** learns it is able to add more and more noise to the original image and successfully reconstruct that original image. In the final stage (Z) of training, the diffusion model **200** generates a random Gaussian distribution of noise from which it can reconstruct the original image.

For the diffusion process in generative modeling, the goal is to design algorithms which transform a given distribution $P_{prior}$ into a given data distribution $P_{data}$:

$$\mathrm{d}\mathbf{X}_t = -\alpha\mathbf{X}_t\mathrm{d}t + \sqrt{2}\mathrm{d}\mathbf{B}_t \, , \qquad \mathbf{X}_0 \sim p_{\mathrm{data}} \, ,$$

$X_t$ is interpreted as a *noising* process, perturbing the data distribution $P_{data}$. $P_{prior}$ is the invariant distribution of the noising process. The process gradually adds noise, and if it is done in small steps for long enough time steps for T>0, $X_t$ gets close to $P_{prior} = \mathcal{N}(0,1/\alpha)$ with mean of 0 and standard deviation of $\frac{1}{\alpha}$.

For reverse diffusion, in principle the process can (approximately) sample from $P_{data}$ by first sampling from $P_{prior}$ and reversing the dynamics of $X_t$. This time-reversal operation leads to another diffusion process with explicit drift and diffusion matrix:

$$\mathrm{d}\mathbf{Y}_t = \{\alpha \mathbf{Y}_t + 2\nabla \log p_{T-t}(\mathbf{Y}_t)\}\mathrm{d}t + \sqrt{2}\mathrm{d}\mathbf{B}_t , \qquad \mathbf{Y}_0 \sim p_{\mathrm{prior}}$$

where $P_t$ is the density of $X_t$. The process is then required to follow Markov chain and discretization of the diffusion process.

The main limitation of generative modeling is its requirement of a large number of step sizes so that the initial forward dynamics is close to the distribution $P_{prior}$ and small enough step sizes so that the neural network approximation holds.

Adding a Schrödinger Bridge allows significant reduction in the number of step sizes needed in order to define score-based generative modeling.

Assuming a reference diffusion $X_t$ with distribution $\mathbb{P}$ describing the process adding noise to the data, the goal is to find $\pi^*$ such that $\pi_0^* = P_{\mathrm{data}}$ and $\pi_T^* = P_{\mathrm{prior}}$ and minimize the Kullback-Leibler divergence between $\pi^*$ and $\mathbb{P}$ :

$$\pi^\star = \mathrm{argmin}\ \{\mathrm{KL}(\pi|\mathbb{P})\ ,\ \pi_0 = p_{\mathrm{data}}\ ,\ \pi_N = p_{\mathrm{prior}}\}$$

**Figure 3** depicts a diagram illustrating an example of image translation between domains in accordance with an illustrative embodiment. This image-to-image translation relies on source diffusion model **302** and target diffusion model **304** that are trained independently on separate domains A and B, respectively. In the present example, domain A comprises CAD image data, and domain B comprises real world images. Training source diffusion model **302** and target diffusion model **304** independently on each domain allows identification of the $P_{prior}$ for each domain.

Diffusion by source diffusion model **302** produces Gaussian distribution **306** which represents latent encodings for domain A. These latent encodings for source images with the source diffusion model **302** are then fed into target diffusion model **304** to construct target images. In this manner, the Gaussian distribution **306** of domain A is translated into Gaussian distribution **308** of domain B, which contains the latent encodings for domain B. Target diffusion model **304** then performs reverse diffusion on Gaussian distribution **308** to construct the target image. Therefore, in the present example a CAD image in domain A is transformed into a photorealistic image in domain B.

The processes of encoding source images and decoding to generate target images are defined via ordinary differential equations (ODEs). Therefore, the process is cycle consistent up to discretization errors of ODS solvers.

**Figure 4** depicts a diagram illustrating semi-generative AI image generation using metadata constraints in accordance with an illustrative embodiment. In this example, source diffusion model **402** generates Gaussian distribution **408** from source 3D CAD image **406** in the CAD domain. This first Gaussian distribution **408** is translated to a second Gaussian distribution **412** in the real world domain by dual diffusion implicit bridges **414**

For the second half of the process (from latent space to the second domain) more meta data **416** is added to help the reverse diffusion to the real world domain. Examples of added metadata might include clustering of data, prompt embedding (e.g., black color), material (e.g., steel), 2D drawing information. The metadata **416** acts as constraints on the Schrödinger bridge of the target diffusion model **404,** which generates a photorealistic image **410** in the real world domain from Gaussian distribution **412**. The constraints provide control that ensures not only that the resultant target image is the same type of image/object as the source image but also is shown facing in the same direction, at the same angle, etc. Such precision and specificity is important for applications such as generating synthetic training data for object detection model training. Therefore, the metadata helps to ensure that the output is as close as possible to the original input.

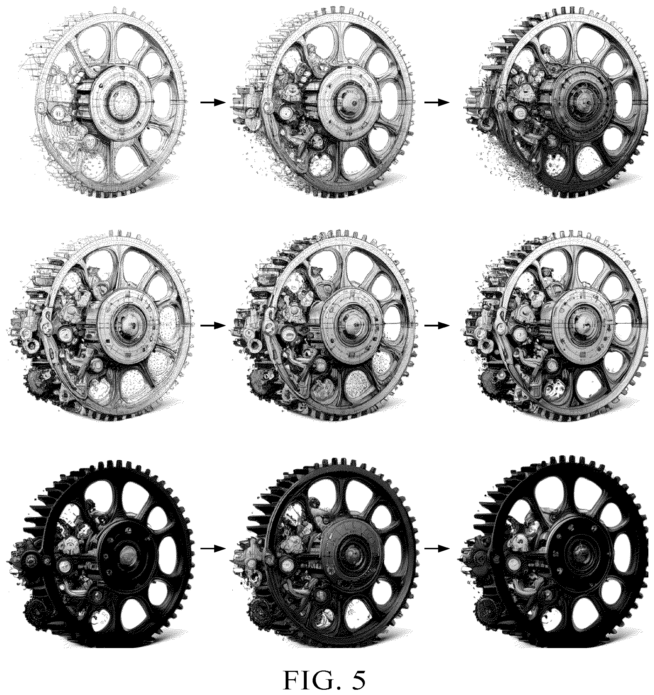

**Figure 5** depicts an example of imaging decoding from a 3D CAD model to a photorealistic model in accordance with an illustrative embodiment.

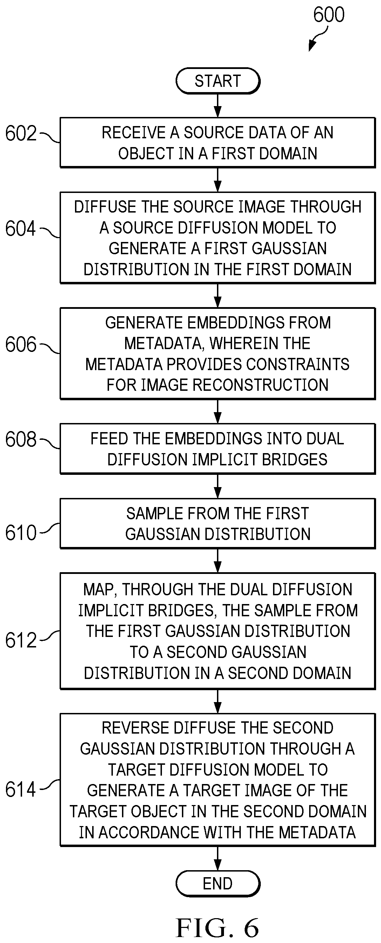

**Figure 6** depicts a flowchart illustrating a process for semi-generative artificial intelligence modelling between domains in accordance with an illustrative embodiment. Process **600** can be implemented in semi-generative system **100** in **Figure 1.**

Process **600** begins by receiving a source image of an object in a first domain (operation **602**). The first domain might comprise three-dimensional CAD (computer assisted drawing) image data, and the source image might comprise a CAD image. Process **600** diffuses the source image through a source diffusion model to generate a first Gaussian distribution in the first domain (operation **604**).

Process **600** then generates embeddings from metadata, wherein the metadata provides constraints for image reconstruction (operation **606**). The metadata comprises clustering of data, prompt embedding, segmentation mask, two-dimensional drawing information, text description of the target object, audio description of the target object, graph representation of the target object, material, or background. The metadata might also comprise information provided by an artificial intelligence design parser that cross-references text and specifications against images and video.

The embeddings are fed into dual diffusion implicit bridges (operation **608**).

Process **600** samples from the first Gaussian distribution (operation **610**) and maps, through the dual diffusion implicit bridges, the sample from the first Gaussian distribution to a second Gaussian distribution in a second domain (operation **612**). The second domain might comprise real world image data.

Process **600** then reverse diffuses the second Gaussian distribution through a target diffusion model to generate a target image of the object in the second domain in accordance with the metadata (operation **614**). In the case of real world image data domain, the target image generated from the reverse diffusion of the second Gaussian distribution comprises a photorealistic image.

Process **600** then ends.

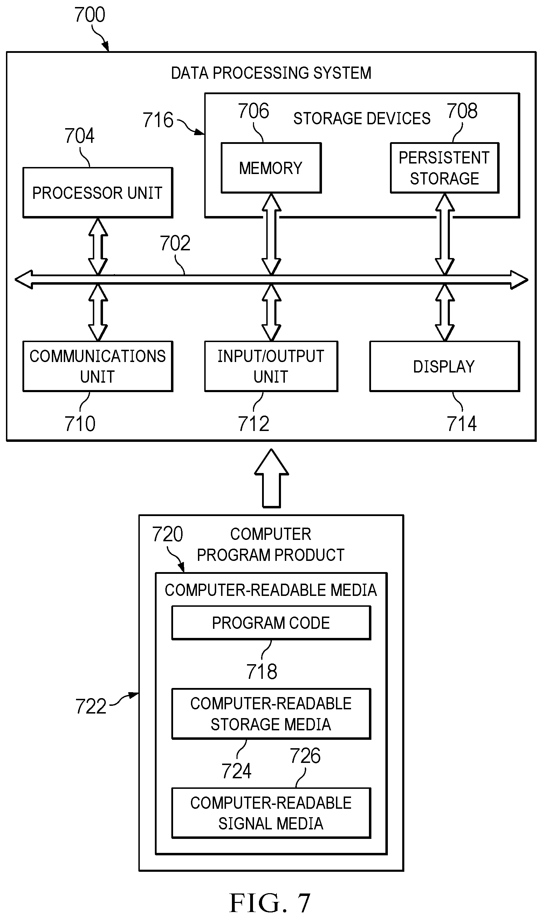

Turning now to **Figure 7,** an illustration of a block diagram of a data processing system is depicted in accordance with an illustrative embodiment. Data processing system **700** may be used to implement computer system **150** in **Figure 1.** In this illustrative example, data processing system **700** includes communications framework **702,** which provides communications between processor unit **704,** memory **706,** persistent storage **708,** communications unit **710,** input/output (I/O) unit **712,** and display **714.** In this example, communications framework **702** takes the form of a bus system.

Processor unit **704** serves to execute instructions for software that may be loaded into memory **706.** Processor unit **704** may be a number of processors, a multi-processor core, or some other type of processor, depending on the particular implementation. In an embodiment, processor unit **704** comprises one or more conventional general-purpose central processing units (CPUs). In an alternate embodiment, processor unit **704** comprises one or more graphical processing units (GPUs).

Memory **706** and persistent storage **708** are examples of storage devices **716.** A storage device is any piece of hardware that is capable of storing information, such as, for example, without limitation, at least one of data, program code in functional form, or other suitable information either on a temporary basis, a permanent basis, or both on a temporary basis and a permanent basis. Storage devices **716** may also be referred to as computer-readable storage devices in these illustrative examples. Memory **706,** in these examples, may be, for example, a random access memory or any other suitable volatile or non-volatile storage device. Persistent storage **708** may take various forms, depending on the particular implementation.

For example, persistent storage **708** may contain one or more components or devices. For example, persistent storage **708** may be a hard drive, a flash memory, a rewritable optical disk, a rewritable magnetic tape, or some combination of the above. The media used by persistent storage **708** also may be removable. For example, a removable hard drive may be used for persistent storage **708.** Communications unit **710,** in these illustrative examples, provides for communications with other data processing systems or devices. In these illustrative examples, communications unit **710** is a network interface card.

Input/output unit **712** allows for input and output of data with other devices that may be connected to data processing system **700.** For example, input/output unit **712** may provide a connection for user input through at least one of a keyboard, a mouse, or some other suitable input device. Further, input/output unit **712** may send output to a printer. Display **714** provides a mechanism to display information to a user.

Instructions for at least one of the operating system, applications, or programs may be located in storage devices **716,** which are in communication with processor unit **704** through communications framework **702.** The processes of the different embodiments may be performed by processor unit **704** using computer-implemented instructions, which may be located in a memory, such as memory **706.**

These instructions are referred to as program code, computer-usable program code, or computer-readable program code that may be read and executed by a processor in processor unit **704.** The program code in the different embodiments may be embodied on different physical or computer-readable storage media, such as memory **706** or persistent storage **708.**

Program code **718** is located in a functional form on computer-readable media **720** that is selectively removable and may be loaded onto or transferred to data processing system **700** for execution by processor unit **704.** Program code **718** and computer-readable media **720** form computer program product **722** in these illustrative examples. In one example, computer-readable media **720** may be computer-readable storage media **724** or computer-readable signal media **726.**

In these illustrative examples, computer-readable storage media **724** is a physical or tangible storage device used to store program code **718** rather than a medium that propagates or transmits program code **718.** Computer readable storage media **724,** as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire, as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire.

Alternatively, program code **718** may be transferred to data processing system **700** using computer-readable signal media **726.** Computer-readable signal media **726** may be, for example, a propagated data signal containing program code **718.** For example, computer-readable signal media **726** may be at least one of an electromagnetic signal, an optical signal, or any other suitable type of signal. These signals may be transmitted over at least one of communications links, such as wireless communications links, optical fiber cable, coaxial cable, a wire, or any other suitable type of communications link.

The different components illustrated for data processing system **700** are not meant to provide architectural limitations to the manner in which different embodiments may be implemented. The different illustrative embodiments may be implemented in a data processing system including components in addition to or in place of those illustrated for data processing system **700**. Other components shown in **Figure 7** can be varied from the illustrative examples shown. The different embodiments may be implemented using any hardware device or system capable of running program code **718**.

As used herein, the phrase "at least one of," when used with a list of items, means different combinations of one or more of the listed items can be used, and only one of each item in the list may be needed. In other words, "at least one of" means any combination of items and number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combinations of these items can be present. In some illustrative examples, "at least one of" can be, for example, without limitation, two of item A; one of item B; and ten of item C; four of item B and seven of item C; or other suitable combinations.

As used herein, "a number of" when used with reference to items, means one or more items. For example, "a number of different types of networks" is one or more different types of networks. In illustrative example, a "set of" as used with reference items means one or more items. For example, a set of metrics is one or more of the metrics.

The description of the different illustrative embodiments has been presented for purposes of illustration and description and is not intended to be exhaustive or limited to the embodiments in the form disclosed. The different illustrative examples describe components that perform actions or operations. In an illustrative embodiment, a component can be configured to perform the action or operation described. For example, the component can have a configuration or design for a structure that provides the component an ability to perform the action or operation that is described in the illustrative examples as being performed by the component. Further, to the extent that terms "includes", "including", "has", "contains", and variants thereof are used herein, such terms are intended to be inclusive in a manner similar to the term "comprises" as an open transition word without precluding any additional or other elements.

Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

Further, the disclosure comprises configurations according to the following clauses.

Clause 1. A computer-implemented method for semi-generative artificial intelligence modelling between domains, the method comprising:

> using a number of processors to perform:
> receiving (602) a source image of an object in a first domain (120);
> diffusing (604) the source image through a source diffusion model (118) to generate a first Gaussian distribution (126) in the first domain;
> generating (606) embeddings (132) from metadata, wherein the metadata provides constraints for image reconstruction;
> feeding (608) the embeddings into dual diffusion implicit bridges (130);
> sampling (610) from the first Gaussian distribution;
> mapping (612), through the dual diffusion implicit bridges, the sample from the first Gaussian distribution to a second Gaussian distribution (128) in a second domain (124); and
> reverse diffusing (614) the second Gaussian distribution through a target diffusion model (122) to generate a target image of the object in the second domain in accordance with the metadata.

Clause 2. The method of Clause 1, wherein the first domain comprises three-dimensional CAD (computer assisted drawing) image data (104).

Clause 3. The method of Clause 1, wherein the second domain comprises real world image data (102).

Clause 4. The method of Clause 3, wherein the target image comprises a photorealistic image.

Clause 5. The method of Clause 1, wherein the metadata comprises at least one of:

> clustering of data;
> prompt embedding;

segmentation mask;

two-dimensional drawing information;

text description of the target object;

audio description of the target object;

graph representation of the target object;

material; or

background.

Clause 6. The method of Clause 1, wherein the metadata comprises information provided by an artificial intelligence design parser (112) that cross-references text and specifications against images and video.

Clause 7. The method of Clause 1, wherein the source diffusion model and target diffusion model comprise Schrödinger bridges (136, 138).

Clause 8. A system for semi-generative artificial intelligence modelling between domains, the system comprising:

a storage device (716) that stores program instructions;

one or more processors (704) operably connected to the storage device and configured to execute the program instructions to cause the system to:

receive (602) a source image of an object in a first domain (120);

diffuse (604) the source image through a source diffusion model (118) to generate a first Gaussian distribution (126) in the first domain;

generate (606) embeddings (132) from metadata, wherein the metadata provides constraints for image reconstruction;

feed (608) the embeddings into dual diffusion implicit bridges (130);

sample (610) from the first Gaussian distribution;

map (612), through the dual diffusion implicit bridges, the sample from the first Gaussian distribution to a second Gaussian distribution (128) in a second domain (124); and

reverse diffuse (614) the second Gaussian distribution through a target diffusion model (122) to generate a target image of the object in the second domain in accordance with the metadata.

Clause 9. The system of Clause 8, wherein the first domain comprises three-dimensional CAD (computer assisted drawing) image data (104).

Clause 10. The system of Clause 8, wherein the second domain comprises real world image data (102).

Clause 11. The system of Clause 10, wherein the target image comprises a photorealistic image.

Clause 12. The system of Clause 8, wherein the metadata comprises at least one of:

clustering of data;

prompt embedding;

segmentation mask;

two-dimensional drawing information;

text description of the target object;

audio description of the target object;

graph representation of the target object;

material; or

background.

Clause 13. The system of Clause 8, wherein the metadata comprises information provided by an artificial intelligence design parser (112) that cross-references text and specifications against images and video.

Clause 14. The system of Clause 8, wherein the source diffusion model and target diffusion model comprise Schrödinger bridges (136, 138).

Clause 15. A computer program product for semi-generative artificial intelligence modelling between domains, the computer program product comprising:

a computer-readable storage medium (724) having program instructions embodied thereon to perform the steps of:

receiving (602) a source image of an object in a first domain (120);

diffusing (604) the source image through a source diffusion model (118) to generate a first Gaussian distribution (126) in the first domain;

generating (606) embeddings (132) from metadata, wherein the metadata provides constraints for image reconstruction;

feeding (608) the embeddings into dual diffusion implicit bridges (130);

sampling (610) from the first Gaussian distribution;

mapping (612), through the dual diffusion implicit bridges, the sample from the first Gaussian distribution to a second Gaussian distribution (128) in a second domain (124); and

reverse diffusing (614) the second Gaussian distribution through a target diffusion model (122) to generate a target image of the object in the second domain in accordance with the metadata.

Clause 16. The computer program product of Clause 15, wherein the first domain comprises three-dimensional CAD (computer assisted drawing) image data (104).

Clause 17. The computer program product of Clause 15, wherein the second domain comprises real world image data (102).

Clause 18. The computer program product of Clause 15, wherein the metadata comprises at least one of:

clustering of data;

prompt embedding;

segmentation mask;

two-dimensional drawing information;

text description of the target object;

audio description of the target object;

graph representation of the target object;

material; or

background.

Clause 19. The computer program product of Clause 15, wherein the metadata comprises information provided by an artificial intelligence design parser (112) that cross-references text and specifications against images and video.

Clause 20. The computer program product of Clause 15, wherein the source diffusion model and target diffusion model comprise Schrödinger bridges (136, 138).

**Claims**

1. A computer-implemented method (600) for semi-generative artificial intelligence modelling between domains, the method (600) comprising:

   using a number of processors to perform:

   receiving (602) a source image of an object in a first domain (120);

   diffusing (604) the source image through a source diffusion model (118) to generate a first Gaussian distribution (126) in the first domain (120);

   generating (606) embeddings (132) from metadata,

   wherein the metadata provides constraints for image reconstruction;

   feeding (608) the embeddings (132) into dual diffusion implicit bridges (130);

   sampling (610) from the first Gaussian distribution (126);

   mapping (612), through the dual diffusion implicit bridges (130), the sample from the first Gaussian distribution (126) to a second Gaussian distribution (128) in a second domain (124); and

   reverse diffusing (614) the second Gaussian distribution (128) through a target diffusion model (122) to generate a target image of the object in the second domain (124) in accordance with the metadata.

2. The method (600) of claim 1, wherein the first domain (120) comprises three-dimensional CAD, Computer Assisted Drawing, image data (104).

3. The method (600) of claim 1 or 2, wherein the second domain (124) comprises real world image data (102).

4. The method (600) of claim 3, wherein the target image comprises a photorealistic image.

5. The method (600) of any one of the preceding claims, wherein the metadata comprises at least one of:

   clustering of data;

prompt embedding;
segmentation mask;
two-dimensional drawing information;
text description of the target object;
audio description of the target object;
graph representation of the target object;
material; or
background.

6. The method (600) of any one of the preceding claims, wherein the metadata comprises information provided by an artificial intelligence design parser (112) that cross-references text and specifications against images and video.

7. The method (600) of any one of the preceding claims, wherein the source diffusion model (118) and the target diffusion model (122) comprise Schrödinger bridges (136, 138).

8. A system (100) for semi-generative artificial intelligence modelling between domains, the system (100) comprising:

a storage device (716) configured to store program instructions;
one or more processors (704) operably connected to the storage device (716) and configured to execute the program instructions to cause the system (100) to:

receive a source image of an object in a first domain (120);
diffuse the source image through a source diffusion model (118) to generate a first Gaussian distribution (126) in the first domain (120);
generate embeddings (132) from metadata, wherein the metadata provides constraints for image reconstruction;
feed the embeddings (132) into dual diffusion implicit bridges (130);
sample from the first Gaussian distribution (126);
map , through the dual diffusion implicit bridges (130), the sample from the first Gaussian distribution (126) to a second Gaussian distribution (128) in a second domain (124); and
reverse diffuse the second Gaussian distribution (128) through a target diffusion model (122) to generate a target image of the object in the second domain (124) in accordance with the metadata.

9. The system (100) of claim 8, wherein the first domain (120) comprises three-dimensional CAD, Computer Assisted Drawing, image data (104).

10. The system (100) of claim 8 or 9, wherein the second domain (124) comprises real world image data (102).

11. The system (100) of claim 10, wherein the target image comprises a photorealistic image.

12. The system (100) of any one of claims 8 to 11, wherein the metadata comprises at least one of:

clustering of data;
prompt embedding;
segmentation mask;
two-dimensional drawing information;
text description of the target object;
audio description of the target object;
graph representation of the target object;
material; or
background.

13. The system (100) of any one of claims 8 to 12, wherein the metadata comprises information provided by an artificial intelligence design parser (112) that cross-references text and specifications against images and video.

14. The system (100) of any one of claims 8 to 13, wherein the source diffusion model (118) and the target diffusion model (122) comprise Schrödinger bridges (136, 138).

**15.** A computer program product (722) for semi-generative artificial intelligence modelling between domains, the computer program product (722) comprising:
a computer-readable storage medium (724) having program instructions embodied thereon to perform the method (600) according to any one of the claims 1 to 7.

# FIG. 1

**COMPUTER SYSTEM** _150_

**SEMI-GENERATIVE SYSTEM** _100_

102 — REAL IMAGES AND VIDEO OF ARTIFACTS

104 — 3D CAD

106 — 2D CAD

108 — ALTERNATIVE SIGNAL MODALITIES

UNSUPERVISED/ SEMI-SUPERVISED MODEL GENERATOR _110_

**DUAL FUSION PIPELINE** — 116

SOURCE DIFFUSION MODEL — 118
- FIRST DOMAIN — 120
- SOURCE SCHRÖDINGER BRIDGE — 136

DUAL DIFFUSION IMPLICIT BRIDGES 130
- EMBEDDINGS — 132

TARGET DIFFUSION MODEL
- SECOND DOMAIN — 124
- TARGET SCHRÖDINGER BRIDGE — 138

FIRST GAUSSIAN DISTRIBUTION — 126

SECOND GAUSSIAN DISTRIBUTION — 128

— 122

GENERATIVE AI REALISTIC SYNTHETIC DATA GENERATOR _134_

AI DESIGN PARSER _112_

PRODUCTION REFERENCES 114

152 — PROCESSOR UNITS

PROGRAM CODE — 154

EP 4 654 150 A1

FIG. 2

FIG. 3

FIG. 4

FIG. 5

600

```
                    ┌─────────┐
                    │  START  │
                    └─────────┘
                         │
                         ▼
602  ┌──────────────────────────────────────┐
     │  RECEIVE A SOURCE DATA OF AN          │
     │  OBJECT IN A FIRST DOMAIN             │
     └──────────────────────────────────────┘
                         │
                         ▼
604  ┌──────────────────────────────────────┐
     │  DIFFUSE THE SOURCE IMAGE THROUGH     │
     │  A SOURCE DIFFUSION MODEL TO          │
     │  GENERATE A FIRST GAUSSIAN            │
     │  DISTRIBUTION IN THE FIRST DOMAIN     │
     └──────────────────────────────────────┘
                         │
                         ▼
606  ┌──────────────────────────────────────┐
     │  GENERATE EMBEDDINGS FROM             │
     │  METADATA, WHEREIN THE                │
     │  METADATA PROVIDES CONSTRAINTS        │
     │  FOR IMAGE RECONSTRUCTION             │
     └──────────────────────────────────────┘
                         │
                         ▼
608  ┌──────────────────────────────────────┐
     │  FEED THE EMBEDDINGS INTO DUAL        │
     │  DIFFUSION IMPLICIT BRIDGES           │
     └──────────────────────────────────────┘
                         │
                         ▼
610  ┌──────────────────────────────────────┐
     │  SAMPLE FROM THE FIRST                │
     │  GAUSSIAN DISTRIBUTION                │
     └──────────────────────────────────────┘
                         │
                         ▼
612  ┌──────────────────────────────────────┐
     │  MAP, THROUGH THE DUAL DIFFUSION      │
     │  IMPLICIT BRIDGES, THE SAMPLE FROM    │
     │  THE FIRST GAUSSIAN DISTRIBUTION      │
     │  TO A SECOND GAUSSIAN                 │
     │  DISTRIBUTION IN A SECOND DOMAIN      │
     └──────────────────────────────────────┘
                         │
                         ▼
614  ┌──────────────────────────────────────┐
     │  REVERSE DIFFUSE THE SECOND           │
     │  GAUSSIAN DISTRIBUTION THROUGH A      │
     │  TARGET DIFFUSION MODEL TO            │
     │  GENERATE A TARGET IMAGE OF THE       │
     │  TARGET OBJECT IN THE SECOND DOMAIN   │
     │  IN ACCORDANCE WITH THE METADATA      │
     └──────────────────────────────────────┘
                         │
                         ▼
                    ┌─────────┐
                    │   END   │
                    └─────────┘
```

FIG. 6

700

## DATA PROCESSING SYSTEM

716

706 STORAGE DEVICES 708

704

| MEMORY | PERSISTENT STORAGE |

PROCESSOR UNIT

702

| COMMUNICATIONS UNIT | INPUT/OUTPUT UNIT | DISPLAY |

710 712 714

720 COMPUTER PROGRAM PRODUCT

COMPUTER-READABLE MEDIA

PROGRAM CODE

718

COMPUTER-READABLE STORAGE MEDIA

722

724 726

COMPUTER-READABLE SIGNAL MEDIA

FIG. 7

Europäisches
Patentamt

European
Patent Office

Office européen
des brevets

# EUROPEAN SEARCH REPORT

**Application Number**

EP 25 17 6651

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Su Xuan ET AL: "DUAL DIFFUSION IMPLICIT BRIDGES FOR IMAGE-TO-IMAGE TRANSLATION", , 1 February 2023 (2023-02-01), pages 1-18, XP093300657, Retrieved from the Internet: URL:https://arxiv.org/abs/2203.08382 * abstract; figure 1 * * page 3 * * page 6 - page 8; figures 2-4 * * page 17 - page 18; figures 7,8 * ----- | 1-15 | INV. G06T19/20 G06N3/00 |
| A | PO R ET AL: "State of the Art on Diffusion Models for Visual Computing", COMPUTER GRAPHICS FORUM, WILEY-BLACKWELL, OXFORD, vol. 43, no. 2, 30 April 2024 (2024-04-30) , page n/a, XP072639041, DOI: 10.1111/CGF.15063 * page 1 - page 2, column 1, line 20 * * page 11, column 2 * * page 5, column 2 - page 6, column 2 * ----- | 1-15 | |
| A | ZHAN FANGNENG ET AL: "Multimodal Image Synthesis and Editing: The Generative AI Era", IEEE TRANSACTIONS ON PATTERN ANALYSIS AND MACHINE INTELLIGENCE, IEEE COMPUTER SOCIETY, USA, vol. 45, no. 12, 24 August 2023 (2023-08-24), pages 15098-15119, XP011952696, ISSN: 0162-8828, DOI: 10.1109/TPAMI.2023.3305243 [retrieved on 2023-08-25] * abstract; figure 1 * ----- | 5,6,12, 13 | TECHNICAL FIELDS SEARCHED (IPC) G06T |

The present search report has been drawn up for all claims

| Place of search | Date of completion of the search | Examiner |
|---|---|---|
| The Hague | 1 September 2025 | Martos Riaño, Demian |

EPO FORM 1503 03.82 (P04C01)